# EUROPEAN PATENT SPECIFICATION

(11) **EP 4 261 011 B1**
(45) Date of publication and mention of the grant of the patent: **04.02.2026**
(21) Application number: 22215689.5
(22) Date of filing: 21.12.2022
(51) Int. Cl.: B29C 53/30

(54) **UNIT AND METHOD FOR PRODUCING STRAWS**
ANLAGE UND VERFAHREN ZUR HERSTELLUNG VON TRINKHALMEN
UNITÉ ET MÉTHODE DE FABRICATION DE PAILLES

(30) Priority: 16.03.2022 IT 202200005075
(43) Date of publication of application: 18.10.2023
(73) Proprietor: G.D S.p.A., 40133 Bologna (IT)
(72) Inventor: FORTINI, Massimo, 40133 Bologna (IT); FAZZIOLI, Fabrizio, 40133 Bologna (IT)
(74) Representative: Bianciardi, Ezio

(56) References cited:
- JP-A- S5 680 431
- KR-A- 20010 090 926
- KR-B1- 100 791 891
- US-A- 3 641 884

## Description

This invention relates to a unit and a method for processing tubular elements used for making straws, for example (but not necessarily) straws bent into a U shape in blister packs, such as those applied commercially to brick packs for liquids.

At present, straws are typically made using machines in which tubular elements cut to size are fed from a hopper, subjected to corrugation to form a concertina-like corrugated zone suitable for bending and then trimmed at one end to form a pointed tip (slanted or "nib-like") and, lastly, bent into the shape of U at the concertinaed zone and placed in blister packs.

Once the corrugated zone has been made, the straws are subjected to axial compression in order to compact the corrugated zone so as to stabilize the curvature imparted to it during a subsequent process of bending (or during use by a user). This axial compression is performed by pairs of pushing elements which engage opposite ends of the straws and reduce the overall length of the straws. Further examples of prior art are known from documents KR100791891 and US3641884.

The Applicant has noticed that in the case of a machine operating on double-length straws, the compressing force acts simultaneously on two corrugated zones. If the corrugations are not perfectly identical, the more compliant corrugation is compressed to a greater extent than the other one, which remains more rigid, resulting in different degrees of compactness, hence non-optimal quality. Moreover, in prior art solutions, the impossibility of operating on two juxtaposed straws (twin-line solution) is implied and, added to that, compacting is impracticable in that there isn't a single tubular element between the two pushing elements.

In this context, the basic technical purpose of this invention is to provide a unit and a method for processing tubular elements used for making straws to overcome the above mentioned disadvantages of the prior art.

More specifically, the aim of this invention is to provide a unit and a method for processing tubular elements used for making straws and which can be implemented on multiple-line production systems.

Another aim of this invention is to provide a unit and a method for processing tubular elements used for making straws and which allow enhancing quality and productivity.

The technical purpose indicated and the aims specified are substantially achieved by a unit and a method for processing tubular elements used for making straws, comprising the technical features described in claims 1 and 13, respectively, and/or in one or more of the claims dependent thereon.

Further features and advantages of this invention are more apparent in the exemplary, hence non-limiting description of a preferred but non-exclusive embodiment of a unit and a method for processing tubular elements used for making straws, as illustrated in the accompanying drawings, in which:
- Figure 1 is a schematic view of the machine according to the invention;
- Figure 2 schematically represents an operating component of the machine of Figure 1;
- Figures 3-9 represent a sequence of operating steps carried out by the component of Figure 2.

The numeral 100 in the accompanying drawings denotes in its entirety a machine for producing straws, specifically of the type marketed in the form of a transparent blister pack containing a U-bent straw, where the straw comprises two, substantially parallel, straight stretches and a curved portion connecting them.

The machine 100 is of the kind configured to move the tubular elements transversely, where the term "transversely" is understood as being relative to the main direction of extension of the tubular elements.

The machine 100 comprises a unit 1 for processing tubular elements T used for making the straws. The unit 1 is designed to make straight tubular elements provide with one or more corrugated zones, to be subjected to further processing as necessary.

The unit 1 comprises a hopper 2 for containing a mass of tubular elements, specifically made of plastic or paper, where the material does not, however, constitute a limitation on the field of application of the invention. The tubular elements in the hopper 2 have a smooth outside surface and are obtainable directly by cutting a continuous tube made using known methods.

The hopper 2 terminates at the bottom with an opening where a pickup drum 3 provided with peripheral seats, preferably suction seats, withdraws individual tubular elements. Alternatively, the pickup drum 3 might receive the individual tubular elements from another means (for example, drum or belt) for conveying tubular elements or from a container alternative to the hopper 2.

The pickup drum 3 withdraws individual tubular elements T and transfers them to the next drum, a deforming or "corrugator" drum 4, also provided with peripheral seats, preferably suction seats, which deforms a stretch of each tubular element to make a concertina-like, corrugated portion 200 suitable for the subsequent folding of the tubular element T, specifically for defining the aforementioned curved portion of the straw, a portion that a user can bend as required.

The deforming drum 4 is also configured for axially compressing the tubular elements to compress the corrugated zone 200, thereby giving the corrugated zone 200 a minimum length configuration.

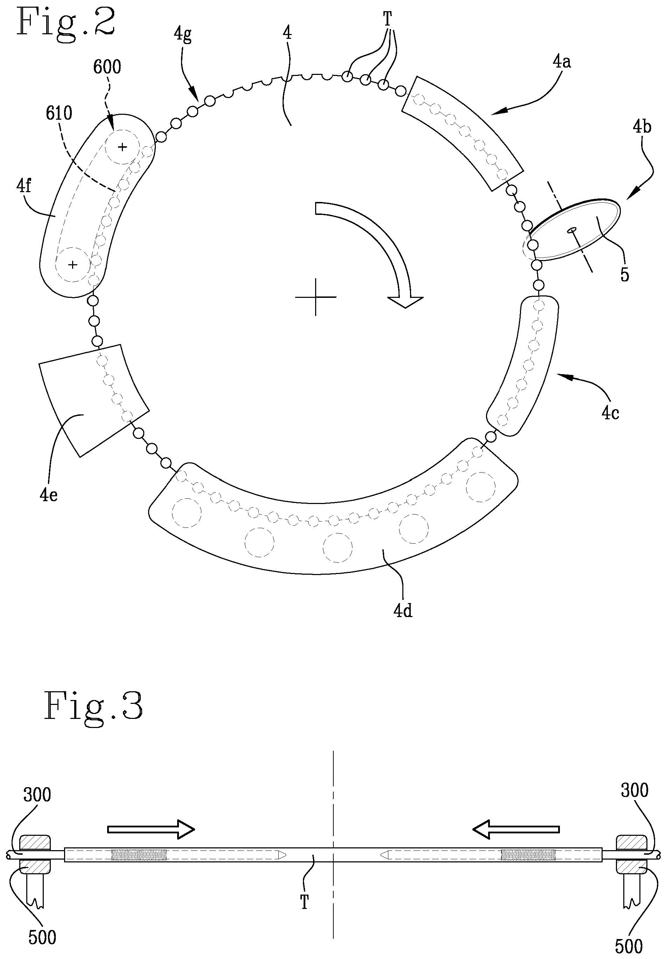

Figure 2 shows a preferred, but non-limiting embodiment of the corrugator drum 4.

In this embodiment, the corrugator drum 4 operates on double-length tubular elements T which are subsequently cut into two (single-length) tubular half-elements HT, which does not, however, constitute a necessary condition for the purposes of the invention.

As shown in that drawing, the corrugator drum 4 has (downstream of a zone where it receives the tubular elements T from the pickup drum 3) a first, needle inserting station 4a, followed by a cutting station 4b, a third, spacing station 4c, a fourth, deforming station 4d, a fifth station 4e for partially extracting the needles, a sixth, compressing station 4f, and a seventh needle extracting station 4g.

The number and order of the stations 4a-4g may vary according to requirements. For example, the cutting station 4b and the spacing station 4c may be omitted if the tubular elements fed are pairs of single-length tubular elements HT, for example, withdrawn in pairs from respective hoppers via the pickup drum 3 and transferred in pairs of coaxial tubular elements. Similarly, the station 4e for partially extracting the needles might also be omitted. Furthermore, the cutting station might be provided, but not the spacing station.

According to a known structure, the needles 300 are known components of a corrugator drum and are movable in rotation with the drum so that each needle 300 corresponds to the same receiving seat of the drum. Also, each needle 300 is movable axially along the receiving seat, hence along the axis of the drum, to create respective operating positions cyclically for each complete rotation of the drum.

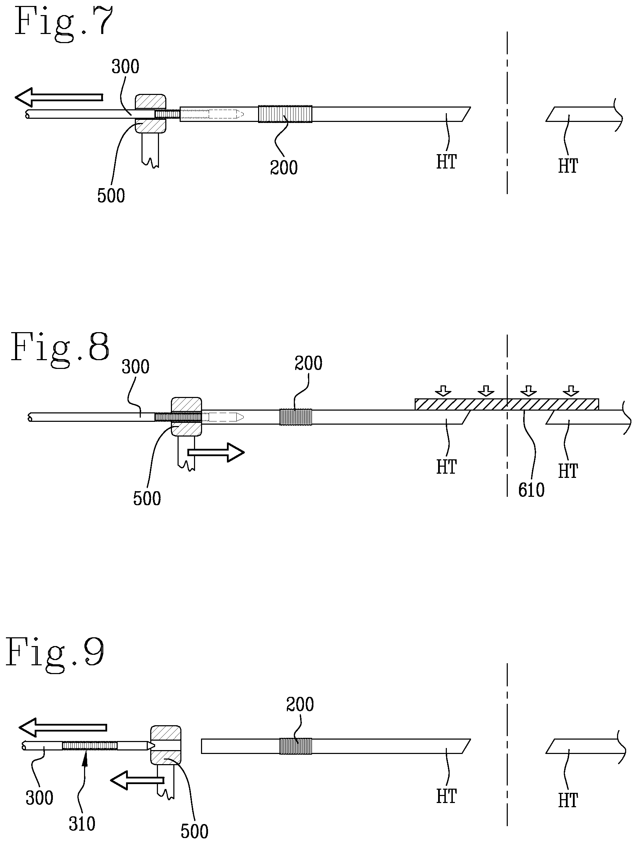

Further, each needle 300 has a corrugated portion 310 (visible in Figure 9) having a succession of ridges and recesses defining an internal anvil portion for the step of corrugating to be performed on the respective tubular element.

Figures 3-9 represent the operating steps performed by the stations 4a-4g; for convenience of description, however, only one side of one of the two tubular half-elements HT is shown (the other side being mirror-symmetrical thereto).

With reference to the first station 4a, after receiving a tubular element T in a receiving seat of the corrugator drum 4, the respective needle 300 is made to advance and is inserted into the tubular element for a predetermined distance (Figure 3).

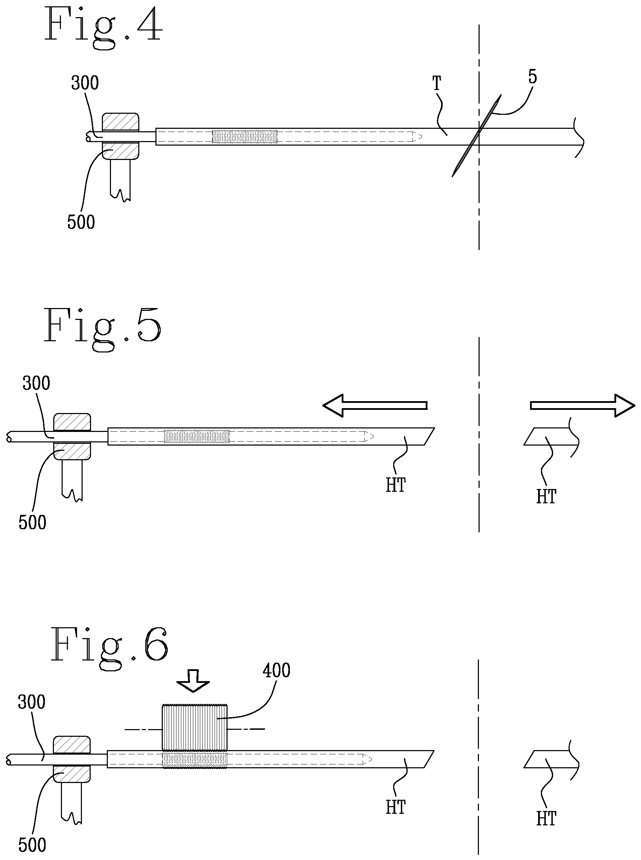

Next, in the second, cutting station 4b, a cutting device 5 cuts the tubular element, making a preferably slanted cut (Figure 4), to obtain two identical, single-length tubular half-elements HT having a preferably pointed, or "nib-like" tip (visible in Figure 5).

Next, in the third, spacing station 4c, the two tubular half-elements HT are spaced axially (Figure 5) by known systems, such as, for example, air jets or fixed deflectors. Preferably, during this step, the tubular half-elements HT are spaced apart until they come into contact with one of the pushing elements 500 (described below) or other suitable means constituting a positioning reference ("zero point").

In the fourth station 4d, the corrugated zone of each tubular half-element HT is made. For this purpose, specific corrugating units 400, specifically stationary, provided with corrugating profiles, are pressed against the tubular element in such a way as to act in conjunction with the corrugated portion 310 of the needle 300, and when the drum 4 rotates, to permanently deform the tubular half-element HT to form the aforementioned corrugated zone 200. As a result, two corrugated zones 200 are made, preferably simultaneously, on the two coaxially juxtaposed, tubular half-elements HT. Thus, the corrugating units 400 and the corrugated portions 310 of the needles 300 constitute the deforming means for making the corrugated zones 200.

In the next, fifth station 4e, the needle 300 is partially extracted, specifically in such a way that its corrugated portion 310 is disengaged from the corrugated zone 200 of the tubular half-element HT, while a portion (externally smooth) of the needle 300 remains inside the corrugated zone 200.

Next, the sixth station 4f axially compresses the two tubular half-elements HT, thus reducing the length of the corrugated zone 200 to make it more compact. This, as in prior art solutions for operating on single straws, is accomplished by compressing means defined by a pair of pushing elements 500, preferably annular in shape, provided with a central opening in which the respective needle 300 can slide independently. Each pushing element 500 has a preferably annular front surface for engaging and pushing the corresponding end of the tubular half-element HT.

In the sixth station 4f, the pushing elements 500 are advanced until engaging the end of the tubular half-element HT.

According to this invention, at the sixth, compressing station 4f, there are blocking means 600 acting on the tubular half-elements HT in a region between the aforementioned two corrugated zones so as to block the tubular half-elements HT axially in the respective receiving seats.

In other words, the blocking means 600 are located at least at the compressing means 500 to block the tubular half-elements HT at least during the compacting action applied by the compressing means 500.

In the embodiment illustrated, the blocking means 600 comprise a pressing member confronting one or more of the receiving seats of the corrugator drum 4 and configured to apply pressure in the direction of the receiving seats, hence radially, in such a way as to compress the tubular half-elements HT towards the respective receiving seats. The pressing member is stationary relative to the rotation of the corrugator drum 400, that is to say, it does not rotate cyclically with the drum but receives the tubular half-elements HT in sequence when the corrugator drum 4 rotates.

In an embodiment, a portion of the respective receiving seat of the tubular half-element HT is located under the pressing member and facing it. Alternatively, under the pressing member and facing it there may be a specific abutment element configured to support the corresponding portion of the tubular half-element HT. Whatever the case, what is important for the purposes of the invention is preventing the portion of the tubular half-element HT opposite the pushing element 500 from sliding axially relative to the corrugated zone 200. In other words, the blocking action of the blocking means 600 is carried out in such a way that each corrugated zone 200 is interposed between the blocking means 600 and a corresponding pushing member 500. That way, compacting the corrugated zone 200 depends solely on the pushing action applied by the respective pushing element 500 and cannot be influenced by other factors.

Preferably, the pressing member confronts a plurality of receiving seats of the corrugator drum, preferably between 3 and 15 in number, and defines a pressing surface that is substantially shaped to match the path followed by the receiving seats in the zone of action of the compressing means, specifically arcuate in shape and concave towards the drum. That way, the pressing action is applied and held for a desired angular amplitude, enough to cover at least the full duration of the compressing process of the compressing means.

In the specific embodiment illustrated, the pressing member comprises a belt 610 having a working section that confronts the receiving seats and driven at a speed synchronous with the feed speed of the tubular half-elements HT in the respective receiving seats, that is to say at a speed corresponding to the tangential speed of the portions of the tubular half-elements HT facing towards the belt 610. That way, not only are the tubular half-elements HT and the belt 610 prevented from sliding relative to each other, but there is also no tendency of the tubular half-elements HT to roll on themselves.

In the seventh station 4g, the pushing elements 500 are retracted and the needles 300 are extracted completely from the respective tubular half-elements HT so that the tubular half-elements HT can be released by the corrugator drum 4.

Preferably, therefore, the deforming means 310, 400, the compressing means 500 and the blocking means 600, and preferably also the cutting device 5, are operatively associated with the same corrugator drum 4, although they might be associated with different drums provided always that the position of the compressing means 500 matches that of the blocking means 600.

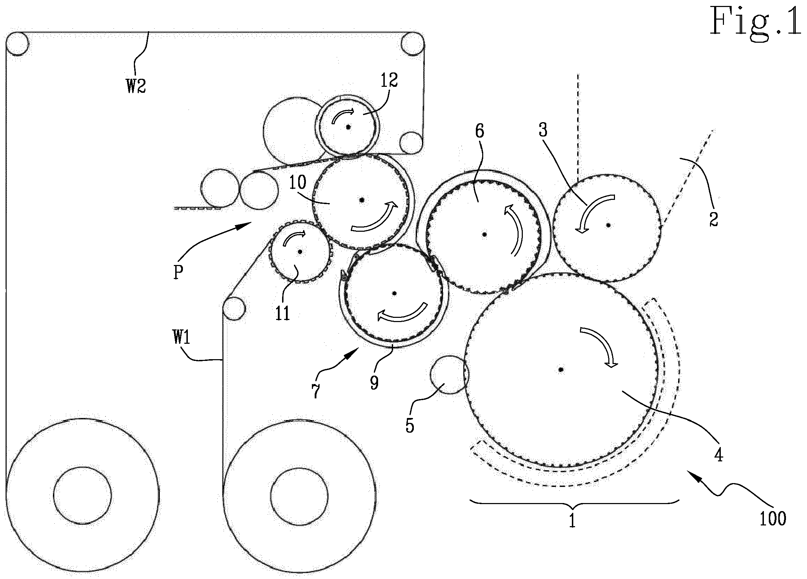

In the machine 100 illustrated in Figure 1, there is a bending drum 6, downstream of the deforming drum 4, configured for receiving the tubular half-elements HT, which are still straight and corrugated by the corrugator drum 4, and for making at least one U bend at the corrugated zone 200 to obtain a straw suitable for packaging.

Next, the U-bent straws are transferred to a rejection drum 7, configured to discard the straws that do not conform with quality standards and then to a packaging line P (of known type) to enclose the U-bent straws into sealed blister packs, preferably individually. With reference to Figure 1, the packaging line comprises, in particular, an inserting drum 10, an applicator drum 11 and a sealing drum 12. The inserting drum 10 is provided with peripheral pockets shaped to match the bent straws and receives a first web of packaging material W1, pressed into the peripheral pockets by the applicator drum 11, and a sequence of U-bent straws from the rejection drum 7. The sealing drum 12 then applies a second web W2 on the inserting drum 10 and seals the two webs W1, W2 together, with the individual straws sealed between them in blister packs.

Preferably, in the packaging line P, the spacing between successive tubular elements is equal to the spacing between the peripheral seats of the pickup drum 3, more preferably, this spacing remaining unchanged from the pickup drum 3 up to the end of the packaging line P.

In a variant embodiment, the machine 100 is a twin- or multiple-line machine, that is to say, for processing two or more tubular elements placed side by side from the beginning, hence withdrawn from multiple hoppers (each for a respective single-length tubular element).

In this situation, the cutting device and, optionally, also the spacing device, are not provided.

In an embodiment not illustrated, the pickup drum 3 withdraws from the hopper 2 and feeds the single-length tubular elements T which receive, on the deforming drum 4, a (single) corrugated zone 200 suitable for defining a bending zone of the tubular element T. Next, the tubular elements T are subjected to axial compacting of the corrugated zone 200 by the corrugating means 500 which comprise a single pushing member 500 engageable with a corresponding end of each tubular element T. The second end of the tubular element T may, before or after being deformed and/or compacted, be optionally subjected to a step of cutting by the cutting device 5 which trims the second end with a slanted cut. In this embodiment, the blocking means 600 act on the tubular elements T in an engagement region of the tubular element T, where the engagement region may be defined by the second end of the tubular element T or by a portion of it between the corrugated zone 200 and the second end. It follows that the corrugated zone 200 is interposed between the pushing member 500 and the blocking means 600.

Features of the unit described in connection with the first embodiment (involving double-length tubular elements) are also applicable to the second embodiment (involving single-length tubular elements).

The invention lends itself to modifications without departing from the scope of the inventive concept. For example, the drums may be replaced with different conveyors with peripheral (suction) seats, for example, conveyor belts, having in common the fact that the tubular elements are oriented transversely to their direction of movement.

The invention achieves the preset aims, overcoming the disadvantages of the prior art.

In effect, the invention allows enhancing compacting quality and reliability, even in twin-line machines, which in turn turn translates to increased productivity.

## Claims

1. A unit for processing tubular elements used for making straws, having a succession of conveyors (3, 4) defining a succession of receiving seats, preferably suction seats, for containing respective tubular elements (T) and for feeding the tubular elements (T) along a conveying direction transverse to the tubular elements (T), the unit (1) comprising, along the conveying direction:
- pickup means (3) for picking up a succession of tubular elements (T);
- deforming means (4), located downstream of the pickup means (3) and acting on the tubular elements (T) to make two axially spaced, corrugated zones (200), in particular simultaneously, the corrugated zones (200) being suitable for defining respective bending zones on the tubular elements (T),
- compressing means (500), located downstream of the deforming means (4) and acting on the tubular elements (T) to axially compact the corrugated zones (200);
- blocking means (600) acting on the tubular elements (T) in a region between the two corrugated zones (200) to block the tubular elements (T) axially in the respective receiving seats;
wherein the blocking means (600) are located at least at the compressing means (500) to block the tubular elements (T) at least during the compacting action applied by the compressing means (500).

2. The unit according to claim 1, wherein the blocking means (600) comprise a pressing member (610) confronting one or more of the receiving seats and configured to apply pressure in the direction of the receiving seats in such a way as to compress the tubular elements (T) towards the respective receiving seats.

3. The unit according to claim 2, wherein the pressing member (610) confronts a plurality of receiving seats and defines a pressing surface substantially shaped to match the path followed by the receiving seats.

4. The unit according to claim 3, wherein the pressing surface has an extension along the conveying direction of the tubular elements (T), such as to apply an axial blocking action on the tubular elements (T) at least for as long as the compressing means (500) apply the axial compressing action.

5. The unit according to claim 3 or 4, wherein the shape of the pressing surface is concave towards the tubular elements (T).

6. The unit according to any one of claims 2 to 5, wherein the pressing member (610) comprises a belt which has an operating branch confronting the receiving seats and which is driven at a speed synchronous with the transverse feed speed of the tubular elements (T) transported by the respective receiving seats.

7. The unit according to any one of claims 2 to 6, further comprising a cutting device (5), located upstream of the compressing means (500) and preferably upstream of the deforming means (400) to divide each tubular element (T) into two half tubular elements (HT), preferably the same in length.

8. The unit according to claim 7, wherein the cutting device (5) is configured for making a slanted cut.

9. The unit according to claim 7 or 8, further comprising a spacing device acting on the two half tubular elements (HT) upstream of the deforming means (400) to space the two half tubular elements (HT) axially from each other.

10. The unit according to any one of claims 1 to 6, wherein the pickup means (3) are configured for picking up pairs of tubular elements (T) from respective hoppers (2) and advancing the tubular elements (T) of each pair coaxially with each other.

11. The unit according to any one of the preceding claims, wherein the deforming means (400), the compressing means (500) and the blocking means (600) and, preferably also the cutting device (5), are operatively associated with the same conveyor, in particular the same drum (4).

12. A unit for processing tubular elements used for making straws, having a succession of conveyors (3, 4) defining a succession of receiving seats, preferably suction seats, for containing respective tubular elements (T) and for feeding the tubular elements (T) along a conveying direction transverse to the tubular elements (T), the unit (1) comprising, along the conveying direction:
- pickup means (3) for picking up a succession of single-length tubular elements (T);
- deforming means (4), located downstream of the pickup means (3) and acting on the tubular elements (T) to make, on each tubular element (T), a corrugated zone (200) suitable for defining a bending zone of the tubular element (T);
- compressing means (500), located downstream of the deforming means (4) and acting on the tubular elements (T) to axially compact the corrugated zone (200) of each tubular element (T), the compressing means (500) comprising a pushing member (500) that is engageable with a first end of each tubular element (T);
- blocking means (600) acting on the tubular elements (T) in an engagement region of each tubular element (T) to block the tubular elements (T) axially in the respective receiving seats, the engagement region being located at a position such that the corrugated zone (200) is interposed between the pushing member (500) and the blocking means (600);
wherein the blocking means (600) are located at least at the compressing means (500) to block the tubular elements (T) at least during the compacting action applied by the compressing means (500); and
wherein the blocking means (600) comprise a pressing member (610) confronting one or more of the receiving seats and configured to apply pressure in the direction of the receiving seats in such a way as to compress the tubular elements (T) towards the respective receiving seats.

13. A method for processing tubular elements (T) used for making straws, in particular implemented using a unit (1) according to any one of claims 1 to 11, comprising the following steps:
- picking up a succession of tubular elements (T);
- making two axially spaced, corrugated zones (200) by permanent deformation of the tubular elements (T), the corrugated zones (200) being suitable for defining respective bending zones on the tubular elements (T),
- axially compressing the corrugated tubular elements (T) to axially compact the corrugated zones (200);
wherein the step of compressing is carried out by a pair of opposing pushing members (500) and blocking the tubular elements (T) axially in the respective receiving seats; and
wherein the step of blocking is carried out by blocking means (600) acting on the tubular elements (T) in such a way that each corrugated zone (200) is interposed between the blocking means (600) and a corresponding pushing member (500).

14. The method according to claim 13, wherein the step of blocking is carried out by a pressing member (610) which applies a pressing action on each tubular element (T) in the direction of the respective receiving seat, in particular by means of a belt which is driven at a speed synchronous with the transverse feed speed of the tubular elements (T).

15. The method according to claim 13 or 14, wherein the step of blocking, in particular the pressing action applied by the pressing member (610), is maintained at least for the entire duration of the axial compressing action applied by the pushing members (500).

16. The method according to any one of claims 13 to 15, wherein the step of compacting is carried out, preferably simultaneously, on pairs of coaxial tubular elements (T).

17. A method for processing tubular elements (T) used for making straws, in particular implemented using a unit (1) according to claim 12, comprising the following steps:
- picking up a succession of single-length tubular elements (T);
- making on each tubular element (T) a corrugated zone (200) by permanent deformation of the tubular element (T), the corrugated zone (200) being suitable for defining a bending zone of the tubular element (T),
- axially compressing the corrugated tubular element (T) so as to axially compact the corrugated zone (200);
wherein the step of compressing is carried out by a pushing member (500) acting on a first end of at least one tubular element (T) so as to block the tubular element (T) axially in the receiving seat; and
wherein the step of blocking is carried out by blocking means (600) acting on the tubular elements (T) in such a way that each corrugated zone (200) is interposed between the blocking means (600) and the pushing member (500); and
wherein the blocking means (600) comprise a pressing member (610) confronting one or more of the receiving seats and configured to apply pressure in the direction of the receiving seats in such a way as to compress the tubular elements (T) towards the respective receiving seats.

## Patentansprüche

1. Einheit zur Bearbeitung von rohrförmigen Elementen, die genutzt werden, um Trinkhalme herzustellen, aufweisend eine Abfolge von Förderern (3, 4), definierend eine Abfolge von Empfangssitzen, vorzugsweise Saugsitzen, zum Enthalten jeweiliger rohrförmiger Elemente (T) und zum Zuführen der rohrförmigen Elemente (T) entlang einer Förderrichtung quer zu den rohrförmigen Elementen (T), wobei die Einheit (1) entlang der Förderrichtung Folgendes umfasst:
- Aufnahmemittel (3) zum Aufnehmen einer Abfolge von rohrförmigen Elementen (T);
- Verformungsmittel (4), die stromabwärts der Aufnahmemittel (3) befindlich sind und auf die rohrförmigen Elemente (T) wirken, um zwei axial beabstandete Rillenzonen (200) insbesondere simultan herzustellen, wobei die Rillenzonen (200) geeignet sind, um jeweilige Biegezonen auf den rohrförmigen Elementen (T) zu definieren;
- Kompressionsmittel (500), die stromabwärts der Verformungsmittel (4) befindlich sind und auf die rohrförmigen Elemente (T) wirken, um die Rillenzonen (200) axial zu verdichten;
- Blockiermittel (600), die auf die rohrförmigen Elemente (T) in einer Region zwischen den beiden Rillenzonen (200) wirken, um die rohrförmigen Elemente (T) axial in den jeweiligen Empfangssitzen zu blockieren,
wobei die Blockiermittel (600) zumindest an den Kompressionsmitteln (500) befindlich sind, um die rohrförmigen Elemente (T) zumindest während der durch die Kompressionsmittel (500) ausgeübten Verdichtungswirkung zu blockieren.

2. Einheit nach Anspruch 1, wobei die Blockiermittel (600) ein Pressglied (610) umfassen, das einem oder mehreren der Empfangssitze gegenübersteht und ausgelegt ist, um Druck derart in die Richtung der Empfangssitze auszuüben, dass die rohrförmigen Elemente (T) hinführend zu den jeweiligen Empfangssitzen komprimiert werden.

3. Einheit nach Anspruch 2, wobei das Pressglied (610) einer Vielzahl von Empfangssitzen gegenübersteht und eine Pressoberfläche definiert, die im Wesentlichen passend zu dem Weg ausgeformt sind, dem die Empfangssitze folgen.

4. Einheit nach Anspruch 3, wobei die Pressoberfläche eine Ausdehnung entlang der Förderrichtung des rohrförmigen Elements (T) aufweist, sodass eine axiale Blockierwirkung auf die rohrförmigen Elemente (T) zumindest während des Zeitraums, in dem die Kompressionsmittel (500) die axiale Kompressionswirkung ausüben, ausgeübt wird.

5. Einheit nach Anspruch 3 oder 4, wobei die Form der Pressoberfläche hinführend zu den rohrförmigen Elementen (T) konkav ist.

6. Einheit nach einem der Ansprüche 2 bis 5, wobei das Pressglied (610) einen Gurt umfasst, der einen Betriebsabzweig aufweist, der den Empfangssitzen gegenübersteht und der bei einer Geschwindigkeit synchron mit der Querzuführungsgeschwindigkeit der von den jeweiligen Empfangssitzen transportierten rohrförmigen Elemente (T) angetrieben wird.

7. Einheit nach einem der Ansprüche 2 bis 6, ferner umfassend eine Schneidvorrichtung (5), die stromaufwärts der Kompressionsmittel (500) und vorzugsweise stromaufwärts der Verformungsmittel (400) befindlich ist, um jedes rohrförmige Element (T) in zwei halbe rohrförmige Elemente (HT) vorzugsweise der gleichen Länge zu trennen.

8. Einheit nach Anspruch 7, wobei die Schneidvorrichtung (5) ausgelegt ist, um einen Schrägschnitt herzustellen.

9. Einheit nach Anspruch 7 oder 8, ferner umfassend eine Beabstandungsvorrichtung, die auf die beiden halben rohrförmigen Elemente (HT) stromaufwärts der Verformungsmittel (400) wirkt, um die beiden halben rohrförmigen Elemente (HT) axial voneinander zu beabstanden.

10. Einheit nach einem der Ansprüche 1 bis 6, wobei die Aufnahmemittel (3) ausgelegt sind, um Paare von rohrförmigen Elementen (T) von jeweiligen Trichtern (2) aufzunehmen und die rohrförmigen Elemente (T) eines jeden Paars koaxial zueinander vorzuschieben.

11. Einheit nach einem der vorhergehenden Ansprüche, wobei die Verformungsmittel (400), die Kompressionsmittel (500) und die Blockiermittel (600) und vorzugsweise auch die Schneidvorrichtung (5) betriebswirksam mit demselben Förderer, insbesondere derselben Trommel (4), assoziiert sind.

12. Einheit zur Bearbeitung von rohrförmigen Elementen, die genutzt werden, um Trinkhalme herzustellen, aufweisend eine Abfolge von Förderern (3, 4), definierend eine Abfolge von Empfangssitzen, vorzugsweise Saugsitzen, zum Enthalten jeweiliger rohrförmiger Elemente (T) und zum Zuführen der rohrförmigen Elemente (T) entlang einer Förderrichtung quer zu den rohrförmigen Elementen (T), wobei die Einheit (1) entlang der Förderrichtung Folgendes umfasst:
- Aufnahmemittel (3) zum Aufnehmen einer Abfolge von rohrförmigen Elementen (T) mit einzelner Länge;
- Verformungsmittel (4), die stromabwärts der Aufnahmemittel (3) befindlich sind und auf die rohrförmigen Elemente (T) wirken, um auf jedem rohrförmigen Element (T) eine Rillenzone (200) herzustellen, die geeignet ist, um eine Biegezone des rohrförmigen Elements (T) zu definieren;
- Kompressionsmittel (500), die stromabwärts der Verformungsmittel (4) befindlich sind und auf die rohrförmigen Elemente (T) wirken, um die Rillenzone (200) eines jeden rohrförmigen Elements (T) axial zu verdichten, wobei die Kompressionsmittel (500) ein Schiebeglied (500) umfassen, das mit einem ersten Ende eines jeden rohrförmigen Elements (T) in Eingriff gelangen kann;
- Blockiermittel (600), die auf die rohrförmigen Elemente (T) in einer Eingriffsregion eines jeden rohrförmigen Elements (T) wirken, um die rohrförmigen Elemente (T) axial in den jeweiligen Empfangssitzen zu blockieren, wobei die Eingriffsregion an einer Position befindlich ist, sodass die Rillenzone (200) zwischen dem Schiebeglied (500) und den Blockiermitteln (600) eingesetzt ist,
wobei die Blockiermittel (600) zumindest an den Kompressionsmitteln (500) befindlich sind, um die rohrförmigen Elemente (T) zumindest während der durch die Kompressionsmittel (500) ausgeübten Verdichtungswirkung zu blockieren, und
wobei die Blockiermittel (600) ein Pressglied (610) umfassen, das einem oder mehreren der Empfangssitze gegenübersteht und ausgelegt ist, um Druck derart in die Richtung der Empfangssitze auszuüben, dass die rohrförmigen Elemente (T) hinführend zu den jeweiligen Empfangssitzen komprimiert werden.

13. Verfahren zur Bearbeitung rohrförmiger Elemente (T), die genutzt werden, um Trinkhalme herzustellen, das insbesondere unter Nutzung einer Einheit (1) nach einem der Ansprüche 1 bis 11 implementiert wird und die folgenden Schritte umfasst:
- Aufnehmen einer Abfolge von rohrförmigen Elementen (T) ;
- Herstellen von zwei axial beabstandeten Rillenzonen (200) durch permanente Verformung der rohrförmigen Elemente (T), wobei die Rillenzonen (200) geeignet sind, um jeweilige Biegezonen auf den rohrförmigen Elementen (T) zu definieren;
- axiales Komprimieren der gerillten rohrförmigen Elemente (T), um die Rillenzonen (200) axial zu verdichten,
wobei der Schritt zum Komprimieren von einem Paar entgegenwirkender Schiebeglieder (500) durchgeführt wird und die rohrförmigen Elemente (T) axial in den jeweiligen Empfangssitzen blockiert werden, und
wobei der Schritt zum Blockieren von Blockiermitteln (600) durchgeführt wird, die auf die rohrförmigen Elemente (T) derart wirken, dass jede Rillenzone (200) zwischen den Blockiermitteln (600) und einem entsprechenden Schiebeglied (500) eingesetzt wird.

14. Verfahren nach Anspruch 13, wobei der Schritt zum Blockieren von einem Pressglied (610) durchgeführt wird, das eine Presswirkung auf jedes rohrförmige Element (T) in die Richtung des jeweiligen Empfangssitzes insbesondere mittels eines Gurts ausübt, der bei einer Geschwindigkeit synchron mit der Querzuführungsgeschwindigkeit der rohrförmigen Elemente (T) angetrieben wird.

15. Verfahren nach Anspruch 13 oder 14, wobei der Schritt zum Blockieren, insbesondere die von dem Pressglied (610) ausgeübte Presswirkung, zumindest während der gesamten Dauer der axialen, von den Schiebegliedern (500) ausgeübten Kompressionswirkung aufrechterhalten wird.

16. Verfahren nach einem der Ansprüche 13 bis 15, wobei der Schritt zum Verdichten vorzugsweise simultan auf Paaren koaxialer rohrförmiger Elemente (T) durchgeführt wird.

17. Verfahren zur Bearbeitung rohrförmiger Elemente (T), die genutzt werden, um Trinkhalme herzustellen, das insbesondere unter Nutzung einer Einheit (1) nach Anspruch 12 implementiert wird und die folgenden Schritte umfasst:
- Aufnehmen einer Abfolge von rohrförmigen Elementen (T) mit einzelner Länge;
- Herstellen einer Rillenzone (200) auf jedem rohrförmigen Element (T) durch permanente Verformung des rohrförmigen Elements (T), wobei die Rillenzone (200) geeignet ist, um eine Biegezone des rohrförmigen Elements (T) zu definieren;
- axiales Komprimieren des gerillten rohrförmigen Elements (T), um die Rillenzone (200) axial zu verdichten,
wobei der Schritt zum Komprimieren von einem Schiebeglied (500) durchgeführt wird, das auf ein erstes Ende von mindestens einem rohrförmigen Element (T) wirkt, sodass das rohrförmige Element (T) axial in dem Empfangssitz blockiert wird, und
wobei der Schritt zum Blockieren von Blockiermitteln (600) durchgeführt wird, die auf die rohrförmigen Elemente (T) derart wirken, dass jede Rillenzone (200) zwischen den Blockiermitteln (600) und dem Schiebeglied (500) eingesetzt wird, und
wobei die Blockiermittel (600) ein Pressglied (610) umfassen, das einem oder mehreren der Empfangssitze gegenübersteht und ausgelegt ist, um Druck derart in die Richtung der Empfangssitze auszuüben, dass die rohrförmigen Elemente (T) hinführend zu den jeweiligen Empfangssitzen komprimiert werden.

## Revendications

1. Unité de traitement d'éléments tubulaires utilisés pour la fabrication de pailles, ayant une succession de convoyeurs (3, 4) définissant une succession de sièges de réception, de préférence des sièges d'aspiration, pour contenir des éléments tubulaires (T) respectifs et pour alimenter les éléments tubulaires (T) le long d'une direction de transport transversale aux éléments tubulaires (T), l'unité (1) comprenant, le long de la direction de transport :
- des moyens de prélèvement (3) pour prélever une succession d'éléments tubulaires (T) ;
- des moyens de déformation (4), situés en aval des moyens de prélèvement (3) et agissant sur les éléments tubulaires (T) pour réaliser deux zones ondulées (200) axialement espacées, en particulier simultanément, les zones ondulées (200) étant aptes à définir des zones de cintrage respectives sur les éléments tubulaires (T) ;
- des moyens de compression (500), situés en aval des moyens de déformation (4) et agissant sur les éléments tubulaires (T) pour compacter axialement les zones ondulées (200) ;
- des moyens de blocage (600) agissant sur les éléments tubulaires (T) dans une région entre les deux zones ondulées (200) pour bloquer les éléments tubulaires (T) axialement dans les sièges de réception respectifs ;
dans laquelle les moyens de blocage (600) sont situés au moins au niveau des moyens de compression (500) pour bloquer les éléments tubulaires (T) au moins pendant l'action de compactage appliquée par les moyens de compression (500).

2. Unité selon la revendication 1, dans laquelle les moyens de blocage (600) comprennent un élément de pression (610) faisant face à un ou plusieurs des sièges de réception et configuré pour appliquer une pression dans la direction des sièges de réception de manière à comprimer les éléments tubulaires (T) vers les sièges de réception respectifs.

3. Unité selon la revendication 2, dans laquelle l'élément de pression (610) fait face à une pluralité de sièges de réception et définit une surface de pression substantiellement formée pour correspondre au trajet suivi par les sièges de réception.

4. Unité selon la revendication 3, dans laquelle la surface de pression a une extension le long de la direction de transport des éléments tubulaires (T), de manière à appliquer une action de blocage axial sur les éléments tubulaires (T) au moins aussi longtemps que les moyens de compression (500) appliquent l'action de compression axiale.

5. Unité selon la revendication 3 ou 4, dans laquelle la forme de la surface de pression est concave vers les éléments tubulaires (T).

6. Unité selon l'une quelconque des revendications 2 à 5, dans laquelle l'élément de pression (610) comprend une courroie qui a une branche de fonctionnement faisant face aux sièges de réception et qui est entraînée à une vitesse synchrone avec la vitesse d'alimentation transversale des éléments tubulaires (T) transportés par les sièges de réception respectifs.

7. Unité selon l'une quelconque des revendications 2 à 6, comprenant en outre un dispositif de coupe (5), situé en amont des moyens de compression (500) et de préférence en amont des moyens de déformation (400) pour diviser chaque élément tubulaire (T) en deux demi-éléments tubulaires (HT), de préférence de même longueur.

8. Unité selon la revendication 7, dans laquelle le dispositif de coupe (5) est configuré pour effectuer une coupe oblique.

9. Unité selon la revendication 7 ou 8, comprenant en outre un dispositif d'espacement agissant sur les deux demi-éléments tubulaires (HT) en amont des moyens de déformation (400) pour espacer les deux demi-éléments tubulaires (HT) axialement l'un de l'autre.

10. Unité selon l'une quelconque des revendications 1 à 6, dans laquelle les moyens de prélèvement (3) sont configurés pour prélever des paires d'éléments tubulaires (T) à partir de trémies (2) respectives et faire avancer les éléments tubulaires (T) de chaque paire coaxialement l'un par rapport à l'autre.

11. Unité selon l'une quelconque des revendications précédentes, dans laquelle les moyens de déformation (400), les moyens de compression (500) et les moyens de blocage (600), et de préférence aussi le dispositif de coupe (5), sont associés fonctionnellement au même convoyeur, en particulier au même tambour (4).

12. Unité de traitement d'éléments tubulaires utilisés pour la fabrication de pailles, ayant une succession de convoyeurs (3, 4) définissant une succession de sièges de réception, de préférence des sièges d'aspiration, pour contenir des éléments tubulaires (T) respectifs et pour alimenter les éléments tubulaires (T) le long d'une direction de transport transversale aux éléments tubulaires (T), l'unité (1) comprenant, le long de la direction de transport :
- des moyens de prélèvement (3) pour prélever une succession d'éléments tubulaires (T) de longueur unique ;
- des moyens de déformation (4), situés en aval des moyens de prélèvement (3) et agissant sur les éléments tubulaires (T) pour réaliser, sur chaque élément tubulaire (T), une zone ondulée (200) apte à définir une zone de cintrage de l'élément tubulaire (T) ;
- des moyens de compression (500), situés en aval des moyens de déformation (4) et agissant sur les éléments tubulaires (T) pour compacter axialement la zone ondulée (200) de chaque élément tubulaire (T), les moyens de compression (500) comprenant un élément de poussée (500) qui peut être engagé avec une première extrémité de chaque élément tubulaire (T) ;
- des moyens de blocage (600) agissant sur les éléments tubulaires (T) dans une région d'engagement de chaque élément tubulaire (T) pour bloquer les éléments tubulaires (T) axialement dans les sièges de réception respectifs, la région d'engagement étant située à une position telle que la zone ondulée (200) est interposée entre l'élément de poussée (500) et les moyens de blocage (600) ;
dans laquelle les moyens de blocage (600) sont situés au moins au niveau des moyens de compression (500) pour bloquer les éléments tubulaires (T) au moins pendant l'action de compactage appliquée par les moyens de compression (500) ; et
dans lequel les moyens de blocage (600) comprennent un élément de pression (610) faisant face à un ou plusieurs des sièges de réception et configuré pour appliquer une pression dans la direction des sièges de réception de manière à comprimer les éléments tubulaires (T) vers les sièges de réception respectifs.

13. Procédé de traitement d'éléments tubulaires (T) utilisés pour la fabrication de pailles, en particulier mis en œuvre à l'aide d'une unité (1) selon l'une quelconque des revendications 1 à 11, comprenant les étapes suivantes :
- prélever une succession d'éléments tubulaires (T) ;
- réaliser deux zones ondulées (200) espacées axialement par déformation permanente des éléments tubulaires (T), les zones ondulées (200) étant aptes à définir des zones de cintrage respectives sur les éléments tubulaires (T) ;
- comprimer axialement les éléments tubulaires (T) ondulés pour compacter axialement les zones ondulées (200) ;
dans lequel l'étape consistant à comprimer est réalisée par une paire d'éléments de poussée (500) opposés et à bloquer les éléments tubulaires (T) axialement dans les sièges de réception respectifs ; et dans lequel l'étape consistant à bloquer est réalisée par des moyens de blocage (600) agissant sur les éléments tubulaires (T) de telle sorte que chaque zone ondulée (200) est interposée entre les moyens de blocage (600) et un élément de poussée (500) correspondant.

14. Procédé selon la revendication 13, dans lequel l'étape consistant à bloquer est réalisée par un élément de pression (610) qui applique une action de pression sur chaque élément tubulaire (T) en direction du siège de réception respectif, en particulier au moyen d'une courroie qui est entraînée à une vitesse synchrone avec la vitesse d'alimentation transversale des éléments tubulaires (T).

15. Procédé selon la revendication 13 ou 14, dans lequel l'étape consistant à bloquer, en particulier l'action de pression appliquée par l'élément de pression (610), est maintenue au moins pendant toute la durée de l'action de compression axiale appliquée par les éléments de poussée (500) .

16. Procédé selon l'une quelconque des revendications 13 à 15, dans lequel l'étape consistant à compacter est réalisée, de préférence simultanément, sur des paires d'éléments tubulaires (T) coaxiaux.

17. Procédé de traitement d'éléments tubulaires (T) utilisés pour la fabrication de pailles, en particulier mis en œuvre à l'aide d'une unité (1) selon la revendication 12, comprenant les étapes suivantes :
- prélever une succession d'éléments tubulaires (T) de longueur unique ;
- réaliser sur chaque élément tubulaire (T) une zone ondulée (200) par déformation permanente de l'élément tubulaire (T), la zone ondulée (200) étant apte à définir une zone de cintrage de l'élément tubulaire (T) ;
- comprimer axialement l'élément tubulaire (T) ondulé de manière à compacter axialement la zone ondulée (200) ;
dans lequel l'étape consistant à comprimer est effectuée par un élément de poussée (500) agissant sur une première extrémité d'au moins un élément tubulaire (T) de manière à bloquer l'élément tubulaire (T) axialement dans le siège de réception ; et
dans lequel l'étape consistant à bloquer est réalisée par des moyens de blocage (600) agissant sur les éléments tubulaires (T) de telle sorte que chaque zone ondulée (200) soit interposée entre les moyens de blocage (600) et l'élément de poussée (500) ; et
dans lequel les moyens de blocage (600) comprennent un élément de pression (610) faisant face à un ou plusieurs des sièges de réception et configuré pour appliquer une pression dans la direction des sièges de réception de manière à comprimer les éléments tubulaires (T) vers les sièges de réception respectifs.
